Europäisches Patentamt

European Patent Office

Office européen des brevets

(19)

(11) Veröffentlichungsnummer: **0 319 669 B1**

# (12) EUROPÄISCHE PATENTSCHRIFT

(45) Veröffentlichungstag der Patentschrift: **23.03.94**

(51) Int. Cl.5: **H02M 3/158**

(21) Anmeldenummer: **88116843.9**

(22) Anmeldetag: **11.10.88**

(54) **Stromregler.**

(30) Priorität: **10.12.87 DE 3741765**

(43) Veröffentlichungstag der Anmeldung:
**14.06.89 Patentblatt 89/24**

(45) Bekanntmachung des Hinweises auf die
Patenterteilung:
**23.03.94 Patentblatt 94/12**

(84) Benannte Vertragsstaaten:
**DE FR GB IT SE**

(56) Entgegenhaltungen:
**EP-A- 0 008 509**
**DE-A- 2 425 585**
**US-A- 4 520 420**

(73) Patentinhaber: **WABCO Vermögensverwal-
tungs-GmbH
Postfach,
Am Lindener Hafen 21
D-30432 Hannover(DE)**

(72) Erfinder: **Binarsch, Jürgen, Dipl.-Ing.
Am Eichkamp 18
D-3051 Haste(DE)**
Erfinder: **Bode, Jürgen, Dipl.-Ing.
Am Neuen Teiche 48
D-3200 Hildesheim(DE)**
Erfinder: **Danne, Lutz, Dipl.-Ing.
Hengstweg 5
D-3003 Ronnenberg(DE)**
Erfinder: **Hagen, Detlef, Dipl.-Ing.
Hägewiesen 94
D-3000 Hannover 51(DE)**
Erfinder: **Lissel, Norbert, Dipl.-Ing.
Weizenkamp 12
D-3016 Seelze(DE)**

(74) Vertreter: **Schrödter, Manfred, Dipl.-Ing.
WABCO Vermögensverwaltungs-GmbH
Postfach 91 12 80
D-30432 Hannover (DE)**

**Beschreibung**

Die Erfindung bezieht sich auf einen Stromregler für eine induktive Last, insbesondere für ein Proportional-Magnetventil gemäß dem Oberbegriff des Patentanspruchs 1.

Zur Ansteuerung von induktiven Lasten, insbesondere von Proportional-Magnetventilen, oder auch von induktiven Stellgliedern, mit einem veränderlichen Strom sind verschiedene Methoden bekannt.

Zur Verringerung der verbrauchten elektrischen Leistung sind insbesondere Schaltregler bzw. Zweipunktregler üblich, die abwechselnd die volle Betriebsspannung und Null an die Spule des Magnetventils legen (EP-PS 0 008 509). Durch Veränderung des Tastverhältnisses können damit mittlere Ströme von Null bis zum Maximalwert eingestellt werden.

Zum Schutz der in der elektrischen Schaltung enthaltenen Transistoren vor der beim Abschalten der Induktivität induzierten Spannung ist es üblich, die Induktivität mit einer Freilaufdiode zu beschalten. Dies hat daneben auch den wesentlichen Vorteil, daß im stationären Betrieb die magnetische Energie der Induktivität weitgehend erhalten bleibt. Hierdurch kann die zur Versorgung der Induktivität erforderliche elektrische Leistung klein gehalten werden.

Im Gegensatz hierzu ist die Verwendung einer Freilaufdiode dann ungünstig, wenn das angesteuerte Magnetventil schnell abfallen soll, da die Freilaufdiode einen schnellen Abbau des Magnetfeldes verhindert. Für diesen Fall ist es aus der o.g. Schrift bekannt, beim Abschalten des Magnetventils mittels einer eingeschalteten Zenerdiode den Kreisstrom der Induktivität schnell zu vermindern. Dabei ist natürlich zu beachten, daß die dann entstehende Abschaltspannung einen zulässigen Wert nicht überschreitet, da sonst der schaltende Transistor gefährdet wird.

Es ist weiter aus der US-PS 4,520,420 eine elektronische Ansteuerschaltung für elektromagnetische Auf-/Zu-Ventile bekannt, die sich vor allem für ein Kraftstoff-Einspritzventil eignet. Die Schaltung enthält einen Freilaufkreis mit einer Zenerdiode, welche in Serie mit einem Widerstand der Magnetventil-Spule parallelgeschaltet ist. Durch den Spannungsabfall an der Zenerdiode ist ein schneller Stromabfall möglich. Falls jedoch ein langsamerer Abfall gewünscht wird, ist die genannte Zenerdiode durch einen Transistor überbrückbar. Die Einschaltung des genannten Transistors erfolgt automatisch in Abhängigkeit vom Erreichen vorbestimmter fester Stromwerte des Spulenstroms. Der Spulenstrom wird von einem Meßwiderstand abgefühlt.

Die o.g. bekannte Anordnung bezieht sich auf eine Ansteuerschaltung für ein Magnetventil einer Kraftstoff-Einspritz-Anlage. Aus diesem Grund ist lediglich ein Ein-Aus-Betrieb erforderlich, da das Einspritzventil entweder offen oder geschlossen sein soll.

Die Erfindung bezieht sich dagegen insbesondere auf eine Steuerung für ein Proportional-Magnetventil, welches auch beliebige Zwischenstellungen einnehmen muß. Aus diesem Grund muß der Strom zwischen Null und einem Maximalwert beliebig einstellbar sein.

Der Erfindung liegt die Aufgabe zugrunde, einen Stromregler der eingangs genannten Art anzugeben, der in der Lage ist, ein proportionales Magnetventil oder ein magnetisch betriebenes Stellglied möglichst schnell herabzuregeln, andererseits aber im stationären Betrieb oder bei langsamer Veränderung des Sollwertes einen sparsamen Stromverbrauch ermöglicht.

Diese Aufgabe wird durch die im Patentanspruch 1 enthaltene Erfindung gelöst. Die Unteransprüche enthalten zweckmäßige Weiterbildungen der Erfindung.

Die Erfindung wird im folgenden anhand einer Zeichnung näher erläutert. Diese zeigt in

**Fig. 1** ein Ausführungsbeispiel eines Blockschaltbildes des erfindungsgemäßen Stromreglers,

**Fig. 2** ein Diagramm eines mit dem erfindungsgemäßen Stromregler geregelten Stromes,

**Fig. 3** ein detailliertes elektrisches Schaltbild des Stromreglers.

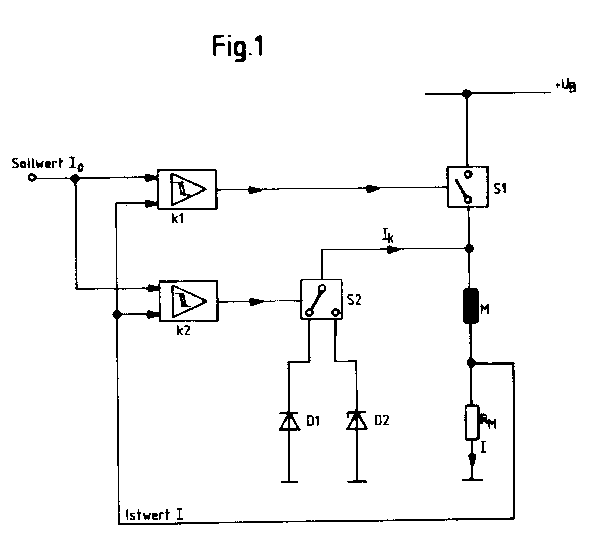

Das in der Fig. 1 dargestellte Blockschaltbild des Stromreglers nach der Erfindung enthält in Reihenschaltung einen an eine Betriebsspannung ($U_B$) angeschlossenen Schalter ($S_1$), die zu versorgende induktive Last (M) sowie einen Meßwiderstand ($R_M$). Der Schalter ($S_1$) wird elektronisch gesteuert durch einen als Differenzverstärker ausgebildeten Schaltregler ($K_1$). An den beiden Eingängen des Schaltreglers ($K_1$) liegen der Sollwert ($I_0$) sowie der Istwert (I) des Stromes durch die Spule der induktiven Last (M). Beide Werte sind als proportionale Spannungswerte nachgebildet. Die proportionale Spannung des Istwerts (I) wird an dem Meßwiderstand ($R_M$) abgegriffen.

Am Ausgang des Schaltreglers ($K_1$) erscheint in bekannter Weise ein L-Signal, solange der Istwert (I) des Stromes durch die Last (M) unter dem Sollwert ($I_0$) liegt. Dieses L-Signal bzw. High-Signal hält den Schalter ($S_1$) geschlossen, so daß der Strom (I) weiter ansteigen kann. Sobald der Istwert (I) den Sollwert ($I_0$) erreicht hat, springt der Ausgangspegel des Schaltreglers ($K_1$) auf 0 bzw. Low und der Schalter ($S_1$) wird geöffnet.

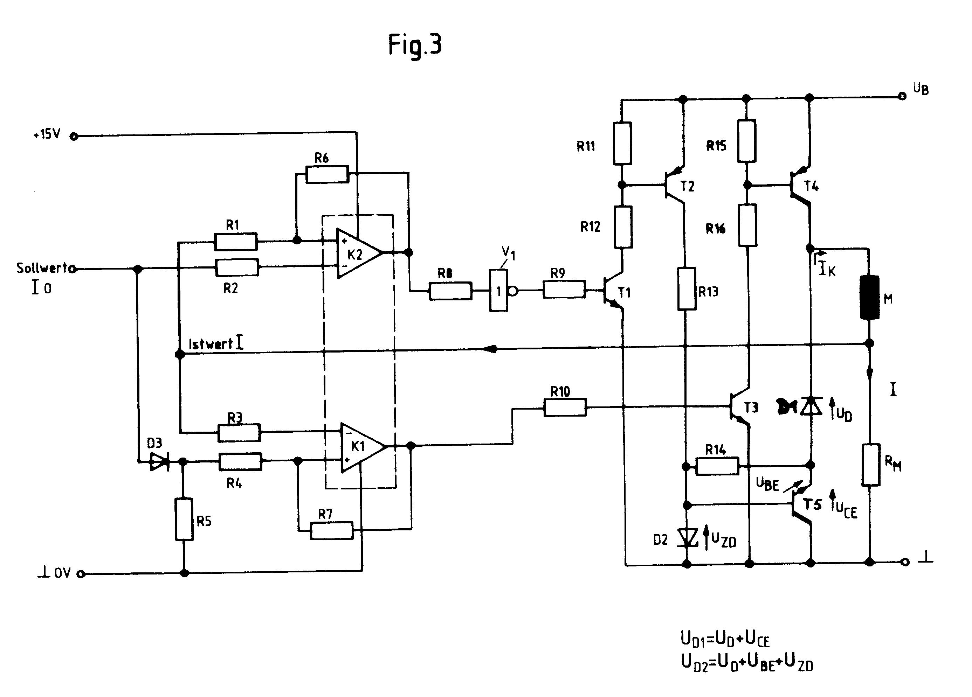

Es ist weiter ein Umschalter ($S_2$) vorgesehen, mit welchem wahlweise eine erste Freilaufdiode ($D_1$) oder eine zweite Freilaufdiode ($D_2$) parallel zur induktiven Last (M) geschaltet werden kann. Der Umschalter ($S_2$) wird gesteuert von einem Änderungsdetektor ($K_2$). An diesem liegen wie am Schaltregler ($K_1$) entsprechende Spannungswerte für den Sollwert ($I_0$) und den Istwert (I) des Spulenstromes. Der Änderungsdetektor ($K_2$) ist ebenso wie der Schaltregler ($K_1$) als Operationsverstärker ausgebildet und so beschaltet (siehe Fig. 3), daß er auf Änderungen, insbesondere Senkungen des Stromes (I) anspricht.

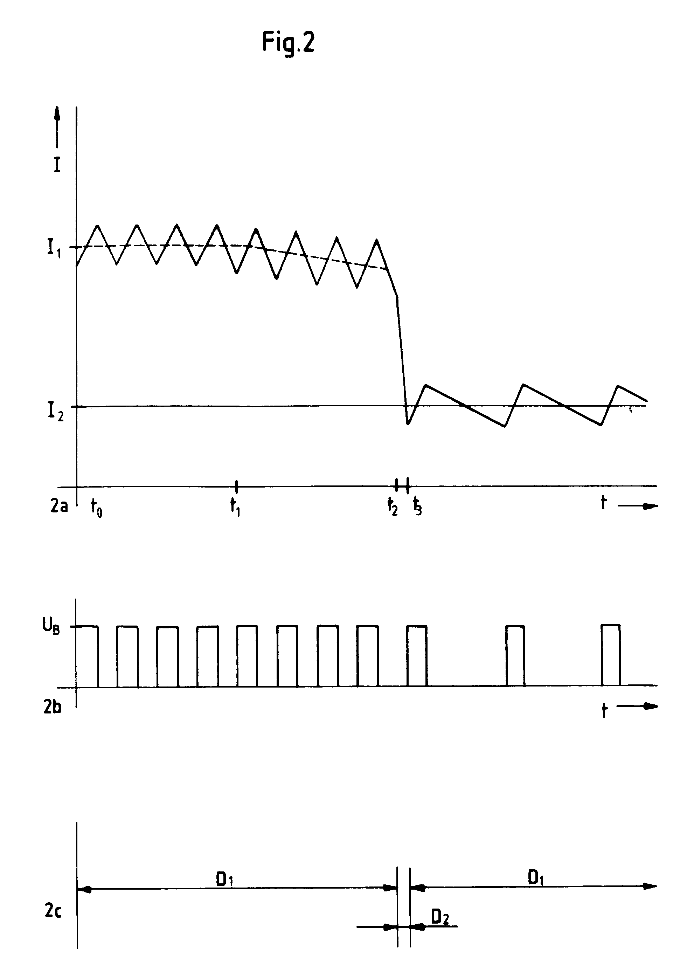

Im folgenden wird die Wirkungsweise des Stromreglers nach der Fig. 1 erläutert. Hierzu wird auch auf das Diagramm der Fig. 2 verwiesen.

Im stationären Betrieb, d.h. von ($t_0$) bis ($t_1$) in der Fig. 2a, regelt der Schaltregler ($K_1$) den Spulenstrom (I) auf einen mittleren Wert ($I_1$). Hierzu wird der Schalter ($S_1$) in regelmäßigen Abständen geöffnet und geschlossen, wodurch die Betriebsspannung ($U_B$) in Form von regelmäßigen Impulsen an die induktive Last (M) geschaltet wird (vergl. Fig. 2b). Damit die Arbeitsfrequenz des Schalters ($S_1$) nicht zu hoch wird, ist der Schaltregler ($K_1$) in bekannter Weise mit einer Hysterese versehen. Die Schaltfrequenz liegt zwischen 300 und 2300 Hz.

Bei langsamen Senkungen des Sollwertes ($I_0$) (Zeitraum von $t_1$ bis $t_2$ in Fig. 2a) sorgt der Schaltregler ($K_1$) durch geringfügiges Herabsetzen der Einschaltdauer von ($S_1$) für ein entsprechendes Verhalten des Spulenstromes (I).

In beiden Betriebsarten, d.h. von ($t_0$) bis ($t_2$), fließt während der Öffnungszeiten des Schalters ($S_1$) ein von der induktiven Last (M) erzeugter Kreisstrom ($I_K$) über den Meßwiderstand ($R_M$) und die erste Freilaufdiode ($D_1$) sowie den Umschalter ($S_2$). Da die erste Freilaufdiode ($D_1$) eine niedrige Durchlaßspannung, etwa in der Größenordnung von 0,7 V hat, sinkt der Spulenstrom (I) jeweils nur langsam ab. Hierdurch bleibt das Magnetfeld der induktiven Last (M) weitgehend erhalten. Durch diese Maßnahme wird ein insgesamt niedriger Energieverbrauch der Schaltung im stationären Betrieb oder im sich langsam ändernden Betrieb erreicht.

Sobald sich der Sollwert ($I_0$) jedoch schnell verringert wird dies von dem Änderungsdetektor ($K_2$) erkannt. Dieser erzeugt daraufhin ein Ausgangssignal, welches den Umschalter ($S_2$) umschaltet, so daß nun der Kreisstrom ($I_K$) durch die zweite Freilaufdiode ($D_2$) fließt. Diese hat eine erheblich höhere Durchlaßspannung als die Diode ($D_1$), nämlich im Bereich von 20 V. Durch diese Maßnahme ist es möglich, den Spulenstrom (I) schnell absinken zu lassen (siehe Zeitraum $t_2$ bis $t_3$ in Fig. 2a). Die zweite Freilaufdiode ($D_2$) begrenzt zugleich die Abschaltspannung auf einen für den Schalter ($S_1$) ungefährlichen Wert.

Die zweite Freilaufdiode ($D_2$) ist in der Fig. 1 zur besseren Austauschbarkeit in gleicher Richtung wie ($D_1$) gezeichnet. Bei einer Realisierung als Zenerdiode muß diese Diode umgekehrt gepolt sein (vergl. Fig. 3).

Wie aus der Fig. 2a erkennbar ist, wird anschließend der Spulenstrom (I) auf einem niedrigeren Wert ($I_2$) konstant gehalten (Zeitraum ab $T_3$). Wie aus der Fig. 2b erkennbar ist, ist hier die Frequenz des Schalters ($S_1$) stark verringert. Aus der Fig. 2c ist weiter erkennbar, daß während der stationären Phasen und der Phasen mit geringer Stromänderung die erste Freilaufdiode ($D_1$) eingeschaltet ist, während in den Phasen mit schneller Absenkung des Sollwertes ($I_0$) die zweite Freilaufdiode ($D_2$) eingeschaltet ist.

In der Fig. 3 ist ein detailliertes Schaltbild der Blockschaltung nach der Fig. 1 dargestellt. Man erkennt den Schaltregler ($K_1$) und den Änderungsdetektor ($K_2$). Beide Bauelemente bzw. Komparatoren ($K_1$) und ($K_2$) sind an eine stabilisierte Versorgungsspannung von + 15 V angeschlossen.

Es handelt sich bei den Komparatoren ($K_1$) und ($K_2$) um zwei beschaltete Operationsverstärker, die beispielsweise gemeinsam im IC des Typs LM2904 der Firma Motorola enthalten sind.

Der Sollwert ($I_0$) des Spulenstromes (I) ist über einen Widerstand ($R_2$) an den negativen Eingang des Änderungsdetektors ($K_2$) angeschlossen. Der Sollwert ($I_0$) ist weiter über eine Diode ($D_3$) und einen Widerstand ($R_4$) an den positiven Eingang des Schaltreglers ($K_1$) angeschlossen. Die Diode ($D_3$) dient dazu, die Arbeitspunkte der Komparatoren auf einen festen Abstand zu halten. Der Widerstand ($R_5$) dient zum Einstellen eines definierten Stromes durch die Diode ($D_3$).

Der vom Meßwiderstand ($R_M$) abgegriffene Istwert des Spulenstromes (I) wird über einen Widerstand ($R_1$) an den positiven Eingang des Änderungsdetektors ($K_2$) angeschlossen und über einen Widerstand ($R_3$) an den negativen Eingang des Schaltreglers ($K_1$) angeschlossen. Beide Operationsverstärker ($K_1$) und ($K_2$) besitzen je einen Rückführungswiderstand ($R_7$) und ($R_6$) zur Einstellen ihrer Hysterese.

Die Erkennung einer schnellen Senkung des Sollwertes ($I_0$) funktioniert wie folgt.

Am positiven Eingang des Schaltreglers ($K_1$) liegt ein um den Spannungsabfall an der Diode ($D_3$) kleinerer Sollwert ($I_0$) als am negativen Eingang des Änderungsdetektors ($K_2$).

Die Hysterese des Schaltreglers ($K_1$) ist so eingestellt, daß der Istwert am positiven Eingang des Änderungsdetektors ($K_2$) auch bei kleinen negativen Sollwertänderungen kleiner bleibt als der Sollwert ($I_0$) am negativen Eingang des Änderungsdetektors ($K_2$). Der Ausgang des Änderungsdetektors ($K_2$) liegt somit auf Low. Als Freilaufspannung wirkt in diesem Fall der Spannungsabfall ($U_D$) an der Diode ($D_1$).

Bei größeren negativen Sollwertänderungen fällt der Sollwert ($I_0$) am negativen Eingang des Änderungsdetektors ($K_2$) dagegen schneller als der Istwert am positiven Eingang des Änderungsdetektors ($K_2$). Hierdurch liegt am positiven Eingang des Änderungsdetektors ($K_2$) für eine gewisse Zeit ein positiveres Potential als am negativen Eingang. Für diese Zeit liegt der Ausgang des Änderungsdetektors ($K_2$) auf hohem Potential (High), so daß nunmehr die höhere Freilaufspannung ($U_{ZD}$) an der induktiven Last (M) anliegt. Hierdurch wird ein schnelles Abfallen des Spulenstromes (I) ermöglicht.

Es ist natürlich auch möglich, die schnelle Änderung bzw. Absenkung des Spulenstromes (I) mittels eines für sich bekannten Differenziergliedes zu erfassen. Diese Variante hat sich jedoch gegenüber der Schaltung nach der Fig. 3 als weniger geeignet herausgestellt.

Der Schaltregler ($K_1$) ist über einen Widerstand ($R_{10}$) an die Basis eines Transistors ($T_3$) angeschlossen. Der Kollektor des Transistors ($T_3$) wird über Widerstände ($R_{15}$, $R_{16}$) mit der Batteriespannung (UB) versorgt. Der Emitter des Transistors ($T_3$) liegt an Masse.

Über den Transistor ($T_3$) ist der Schalter ($S_1$), dargestellt als Transistor ($T_4$), steuerbar. Als Schalter ($S_1$) dient z.B. ein Transistor vom Typ BDX 34 der Fa. RCA. Dieser liegt wie in der Fig. 1 dargestellt in Reihe zur induktiven Last (M) und zum Meßwiderstand ($R_M$). Die Regelung des Schalters ($S_1$) bzw. des Spulenstromes (I) erfolgt durch den Schaltregler ($K_1$) in Abhängigkeit von der Differenz zwischen dem Sollwert und dem Istwert (I).

Der Ausgang des Änderungsdetektors ($K_2$) ist über Widerstände ($R_8$, $R_9$) und über einen Inverter ($V_1$) an die Basis eines Transistors ($T_1$) angeschlossen. Der Inverter ($V_1$) dient zum Anpassen des Ausgangssignals des Änderungsdetektors ($K_2$) an die nachfolgende Transistorstufe. Als Inverter ($V_1$) kann der Typ AEF40106 der Fa. SGS benutzt werden.

Der Transistor ($T_1$) ist über Widerstände ($R_{11}$, $R_{12}$) an die Batteriespannung ($U_B$) angeschlossen. Der Transistor ($T_1$) dient zur Steuerung eines Transistors (T2), dessen Emitter an der Batteriespannung ($U_B$) liegt, und dessen Kollektor über einen Widerstand ($R_{13}$) und über die Zenerdiode ($D_2$) an Masse liegt. Die Bauelemente ($T_1$, $T_2$, $R_{11}$, $R_{12}$, $R_{13}$) stellen den Umschalter ($S_2$) dar.

Am Kollektor des Transistors ($T_4$) liegt weiterhin über eine Diode ($D_1$) der Transistor ($T_5$). Dessen Basis ist mit der Anode der Zenerdiode ($D_2$) verbunden. Der Emitter des Transistors ($T_5$) ist über einen Widerstand ($R_{14}$) mit der Anode der Zenerdiode ($D_2$) verbunden. Es kann z.B. ein Transistor des Typs BDT 65 der Fa. Volvo benutzt werden. Der Transistor ($T_5$) bildet den Umschalter ($S_2$) aus der Fig. 1.

Im Normalbetrieb, d.h. bei konstantem Sollwert ($I_0$) oder nur geringer Änderung des Sollwertes, ist der Ausgang des Änderungsdetektors ($K_2$) auf Null. Durch den Inverter ($V_1$) wird der Transistor ($T_1$) sowie der Transistor ($T_2$) leitend. Hierdurch liegt die Anode der Zenerdiode ($D_2$) auf einem Potential von ca. 0,7 V. Durch die von der induktiven Last (M), nach Abschalten von ($T_4$) induzierte Spannung sinkt das Potential am Emitter von ($T_5$) auf negative Spannungswerte. Bei $U_E$ = 1,4 V öffnet ($T_5$) und übernimmt den von der Induktivität getriebenen Kreisstrom ($I_K$). Die mit der Fig. 1 vergleichbare Durchlaßspannung ($U_{D1}$) für die erste Freilaufdiode ergibt sich in diesem Fall zu

$$U_{D1} = U_D + U_{CE}.$$

Die Spannung ($U_M$) über der induktiven Last (M) erhöht sich um den vom fließenden Strom abhängenden Spannungsfall am Meßwiderstand ($R_M$) ($R_M$ = 0.22 Ω).

Falls nun der Änderungsdetektor ($K_2$) eine schnelle Senkung des Sollwertes ($I_0$) erkennt, schaltet ($K_2$) durch. Die Transistorstufe ($T_1$/$T_2$) sperrt, wodurch die Basis von ($T_5$) nicht mehr auf + 0,7 V gehalten wird. Die Zenerdiode ($D_2$) wird nun in Sperrichtung betrieben, wodurch das Basispotential von ($T_5$) auf -($U_{ZD}$) und das Emitterpotential auf -($U_{ZD}$ + $U_{BE}$) absinkt. Der Transistor ($T_5$) übernimmt dann den größen Teil des Kreisstroms ($I_K$). In diesem Fall ergibt sich die mit Fig. 1 vergleichbare Durchlaßspannung ($U_{D2}$) der zweiten Freilaufdiode ($D_2$) zu

$$U_{D2} = U_D + U_{BE} + U_{ZD}$$

Hierin ist $U_{ZD}$ mit einer Größe von etwa 20 V der maßgebliche Anteil. Damit wird der Spulenstrom bei schnellen Änderungen des Sollwerts ($I_0$) wie gewünscht mit einem hohen Gradienten verringert.

## Patentansprüche

1. Stromregler für eine induktive Last (M), insbesondere für ein Proportional-Magnetventil, wobei der Spulenstrom (I) mittels eines Schaltreglers ($K_1$) und eines Schalters ($S_1$) auf einem beliebigen Sollwert ($I_0$) regelbar ist, und wobei die induktive Last (M) einen Freilaufkreis mit verschiedenen energieverbrauchenden Elementen enthält, wobei ein erstes Element als eine erste Freilaufdiode ($D_1$) ausgeführt ist, dadurch gekennzeichnet, daß ein zweites Element als eine zweite Freilaufdiode ($D_2$) mit höherer Durchlaß-spannung als die der ersten

Freilaufdiode ($D_1$) ausgeführt ist und daß die zweite Freilaufdiode ($D_2$), nur dann einschaltbar ist, wenn die Änderungsgeschwindigkeit des Sollwertes ($I_0$) des Spulenstromes (I) einen Schwellwert übersteigt, wobei die Umschaltung auf die zweite Freilaufdiode ($D_2$) durch einen Umschalter ($S_2$) erfolgt, welcher von einem Änderungsdetektor ($K_2$) dann ansteuerbar ist, wenn dieser eine schnelle Senkung des Sollwertes ($I_0$) erkennt.

2. Stromregler nach Anspruch 1, <u>dadurch gekennzeichnet</u>, daß die Durchlaßspannung der zweiten Freilaufdiode ($D_2$) zwischen 10 V und 30 V beträgt.

3. Stromregler nach Anspruch 1 bis 2, <u>dadurch gekennzeichnet</u>, daß der Spulenstrom (I) mit einem Meßwiderstand ($R_M$) ermittelt wird, der in Reihe zur induktiven Last (M) liegt.

4. Stromregler nach Anspruch 1 bis 4, <u>dadurch gekennzeichnet</u>, daß die zweite Freilaufdiode ($D_2$) als in Sperrichtung betriebene Zenerdiode ausgebildet ist.

## Claims

1. Current regulator for an inductive load (M), especially for a proportional solenoid valve, wherein the coil current (I) can be regulated at any desired set value ($I_0$) by means of a switching regulator ($K_1$) and a switch ($S_1$), and wherein the inductive load (M) contains a recovery circuit having various energy-consuming elements, wherein a first element is constructed as a first recovery diode ($D_1$), characterised in that a second element is constructed as a second recovery diode ($D_2$) having a higher on-state voltage than the first recovery diode ($D_1$), and the second recovery diode ($D_2$) can be switched on only when the rate of change of the set value ($I_0$) of the coil current (I) exceeds a threshold value, the change-over to the second recovery diode ($D_2$) being effected by a change-over switch ($S_2$) that can be triggered by a change detector ($K_2$) when the latter detects a rapid lowering of the set value ($I_0$).

2. Current regulator according to claim 1, characterised in that the on-state voltage of the second recovery diode ($D_2$) is from 10 V to 30 V.

3. Current regulator according to claims 1 and 2, characterised in that the coil current (I) is determined by a measuring resistor ($R_M$) connected in series with the inductive load (M).

4. Current regulator according to claims 1 to 4, characterised in that the second recovery diode ($D_2$) is constructed as a Zener diode that is operated in the reverse direction.

## Revendications

1. Régulateur de courant pour une charge inductive (M), en particulier pour une électro-vanne à action proportionnelle, régulateur dans lequel l'intensité (I) qui passe dans la bobine peut, au moyen d'un régulateur de commutation ($K_1$) et d'un interrupteur ($S_1$), être régulée sur une valeur prescrite quelconque ($I_0$), et dans lequel la charge inductive (M) contient un circuit redresseur présentant différents éléments récepteurs d'énergie, un premier élément étant réalisé sous forme d'une première diode redresseuse ($D_1$), régulateur caractérisé par le fait qu'un second élément est réalisé sous forme d'une seconde diode redresseuse ($D_2$) avec une tension de passage plus élevée que celle de la première diode redresseuse ($D_1$) et par le fait que la seconde diode redresseuse ($D_2$) ne peut être mise en circuit que lorsque la vitesse de changement de la valeur prescrite ($I_0$) de l'intensité (I) qui passe dans la bobine dépasse une valeur de seuil, la commutation sur la seconde diode redresseuse ($D_2$) se faisant au moyen d'un commutateur ($D_2$) qui peut être piloté par un détecteur de changement ($K_2$) lorsque celui-ci reconnaît une diminution rapide de la valeur prescrite ($I_0$).

2. Régulateur de courant selon la revendication 1, caractérisé par le fait que la tension de passage de la seconde diode redresseuse ($D_2$) se situe entre 10 V et 30 V.

3. Régulateur de courant selon les revendications 1 à 2, caractérisé par le fait que l'intensité (I) qui passe dans la bobine est déterminée par une résistance de mesure ($R_M$) qui est montée en série avec la charge inductive (M).

4. Régulateur de courant selon la revendication 1 à 4, caractérisé par le fait que la seconde diode redresseuse ($D_2$) est conçue sous forme de diode Zener fonctionnant dans le sens où elle n'est pas conductrice.

# Fig.1

Sollwert $I_0$

k1

k2

S1

S2

$I_k$

D1 D2

M

$R_M$

I

+$U_B$

Istwert I

EP 0 319 669 B1

# Fig.2

Fig.3

$$U_{D1} = U_D + U_{CE}$$
$$U_{D2} = U_D + U_{BE} + U_{ZD}$$